# EUROPÄISCHE PATENTANMELDUNG

(11) **EP 1 134 513 A1**
(43) Veröffentlichungstag der Anmeldung: **19.09.2001**
(21) Anmeldenummer: 01810242.6
(22) Anmeldetag: 09.03.2001
(51) Int. Cl.: F24J 2/44, F24J 2/40, F24J 2/46

(54) **Solar-Kollektor**

(30) Priorität: 13.03.2000 CH 4742000
(71) Anmelder: Pennella, Giuseppe, 3532 Zäziwil (CH)
(72) Erfinder: Pennella, Giuseppe, 3532 Zäziwil (CH)
(74) Vertreter: Steiner, Martin

(57) **Zusammenfassung**

Im Kollektorgehäuse (1-3) mit dem durchsichtigen Mantel (1) wird das Absorber-Element (9) und der darin befindliche Wärmeträger erhitzt. Im ausserhalb des Gehäuses liegenden Rohr (10) wird der Wärmeträger gekühlt, so dass im Kollektor bei Erhitzung eine Zirkulation entsteht. Eine durch einen Thermostaten (7) gesteuerte Klappe (6) kann bei Überhitzung eine Öffnung (4) zur Durchlüftung und Kühlung des Kollektors freigeben. Es wird insgesamt ein automatischer Betrieb des Kollektors ohne elektrische Installation und Energie ermöglicht.

## Beschreibung

Die vorliegende Erfindung betrifft einen Solar-Kollektor gemäss Oberbegriff des Anspruches 1 und dessen Verwendung gemäss Anspruch 8. Ein derartiger Solar-Kollektor, im Folgenden als "Kollektor" bezeichnet, ist z.B. aus dem U.S.-Patent 4,685,445 bekannt, wobei durch einen bestimmten Aufbau des dem Kollektor zugeordneten Wärmespeichers eine Umkehr der Wärmeträger-Strömung bei kaltem Kollektor verhindert werden soll. Damit wird insgesamt ein Aufbau erzielt, der ohne elektrische Energie bzw. ohne Umwälzpumpe und Steuerung auszukommen scheint.

Bei dieser und anderen Kollektor-Anordnungen ist jedoch das Problem einer Überhitzung des Kollektors bzw. des damit verbundenen Wärmespeichers nicht ohne Aufwand an elektrischer Energie und Installation gelöst. Um Überhitzung zu vermeiden ist es bekannt, den bzw. die Kollektoren abzuschatten oder den Wärmespeicher nachts zum Teil durch Umsteuerung der Wärmeträgerströmung im Kollektor abzukühlen, damit die Speicherkapazität während der folgenden Heizperiode jedenfalls genügt. Ein Betrieb ist hierbei, wie erwähnt, ohne elektrische Energie und Installation nicht möglich.

Ein Ziel der vorliegenden Erfindung ist es, einen sicheren Betrieb ohne den Einsatz elektrischer Energie und Anlagen zu gewährleisten. Dieses Ziel wird gemäss dem Kennzeichen des Anspruches 1 erreicht. Durch die Belüftung des Kollektor-Gehäuses entsteht zwar eine gewisse Energiebusse, aber das trifft für bekannte Anlagen ebenso zu.

Ein weiteres Ziel der Erfindung besteht darin, einen Kollektor so auszuführen, dass er ohne jede Anpassung in beliebigen Anlagen, also mit oder ohne Umwälzpumpe und Steuerung, einsetzbar ist. Dieses Ziel wird gemäss Anspruch 2 erreicht, indem der Kollektor an sich autonom für die Umwälzung des Wärmeträgers sorgt, wozu er nötigenfalls mit einem Rückschlagventil ausgerüstet sein kann. Er kann aber ebenso in einem System mit Umwälzpumpe und beliebig ausgebauter Steuerung verwendet werden, wenn es darum geht, mit höherem Aufwand an elektrischer Energie und Ausrüstung eine höhere Ausbeute der verfügbaren Sonnenenergie zu erzielen.

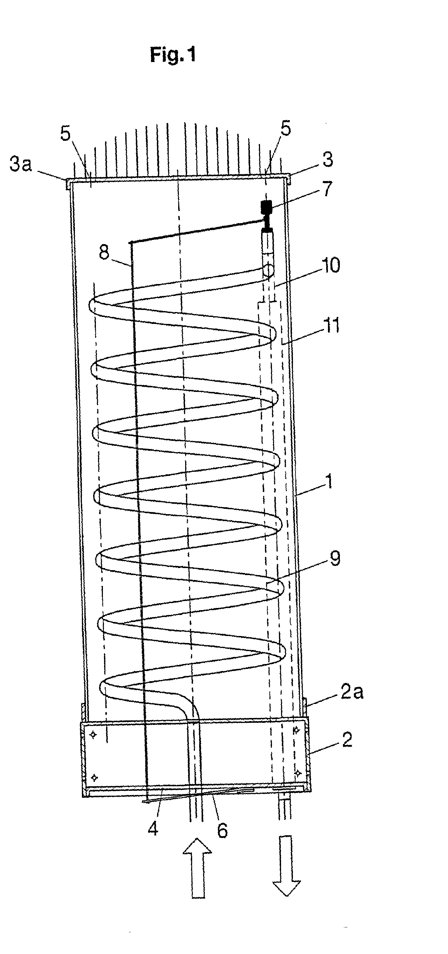

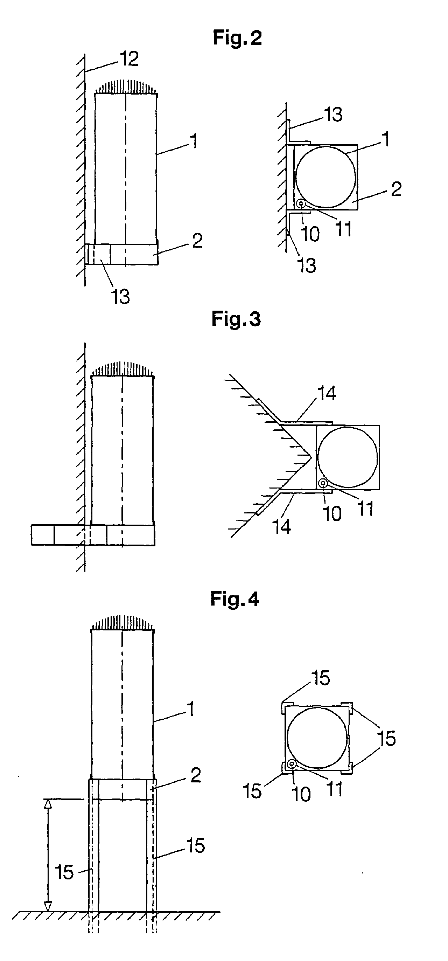

Die Erfindung wird nun anhand der Zeichnung näher erläutert, in welcher Fig. 1 einen Axialschnitt des Kollektors schematisch darstellt und die Fig. 2 bis 4 Beispiele bevorzugter Montagearten des Kollektors zeigen.

Der Kollektor weist einen zylindrischen Gehäusemantel 1 aus durchsichtigem Material auf, der auf einer Basis 2 aus Metall montiert ist. Diese Basis 2 und ein Deckel 3 sind je mit einem Flansch 2a bzw. 3a versehen, in welchen der Mantel 1 gehalten und zentriert ist. Mit der strichpunktierten Mittellinie in Fig. 1 ist angedeutet, dass in der Gehäuseaxe zwischen Basis und Deckel eine Zugstange vorgesehen ist, welche das ganze Kollektorgehäuse zusammenhält und stabilisiert. Die Basis 2 weist eine Öffnung 4 und der Deckel 3 einen Kranz von Öffnungen 5 auf. Die Öffnung 4 kann mittels einer Klappe 6 verschlossen werden. Bei offener Klappe 6 - wie dargestellt - kann der Innenraum des Kollektors durchlüftet werden, um eine Überhitzung desselben bzw. des Wärmeträgers zu vermeiden. Die Klappe 6 wird durch einen mechanischen Thermostaten 7 über ein Zugorgan 8 betätigt, und je nach Einstellung wird die Klappe 6 bei Erreichen einer Solltemperatur, z.B. 65°C geöffnet. Die dabei durch Kaminwirkung auftretende Lüftung des Kollektors verhindert eine Überhitzung desselben. Die Kühlwirkung kann intensiviert werden durch den Einbau wirbelbildender Leitbleche. Als Absorber-Element ist ein schraubenförmiges Rohr 9 vorgesehen, das oben in ein absteigendes Rohr 10 ausserhalb des Gehäuses mündet. Das Rohr 10 ist von einem oben und unten offenen Kühlrohr 11 umgeben, in welchem ein Kühlmittel, z.B. durch Kaminwirkung aufsteigende Luft, zirkulieren kann. Um die Ausnutzung der einfallenden Strahlung zu verbessern und die Rohre 10 und 11 möglichst abzuschatten, kann im oder an der Aussenseite des Mantels 1 ein Reflektor angebracht bzw. ein reflektierender Belag aufgebracht werden. Der Deckel 3 ist mit aufstehenden Stacheln besetzt, was zur Verhinderung der Verunreinigung durch Vögel dient.

In Fig. 1 ist angedeutet, dass im Betrieb ein Wärmeträger von unten in das Rohr 9 eintritt, darin durch die Sonnenstrahlung erhitzt wird und unter angemessener Abkühlung durch das absteigende Rohr 10 austritt. Der Wärmeträger-Kreis ist mit einem Wärmetauscher in einem Wärmespeicher verbunden. Durch die Erwärmung im Absorber-Element 9 und die Abkühlung im Rohr 10 sowie im Wärmetauscher entsteht eine Schwerkraftzirkulation ohne Umwälzpumpe. Eine Überhitzung wird vermieden wie oben beschrieben. Es ist daher keine elektrische Energie und Installation zum Betrieb erforderlich. Dabei wird der Kollektor vorzugsweise möglichst hoch, z.B. 3m oder höher bemessen um einen guten Schwerkrafteffekt zu erzielen. Der Kollektor kann aber auch ohne Weiteres mit einer geeigneten Steuerung und Umwälzpumpe betrieben werden, was eine bessere Ausbeute der verfügbaren Energie erlaubt. Es bleibt hierbei auch die besonders einfache Überhitzungssicherung erhalten. Bei dieser Betriebsart kann das Kühlrohr 11 oben oder unten verschlossen werden um die Zirkulation und die damit verbundene Abkühlung des Wärmeträgers zu verhindern.

Die Montage des Kollektors ist einfach und meist ohne Baubewilligung möglich. Die senkrechte Mantelfläche ist weitgehend selbstreinigend. Schnee kann kaum haften bleiben. Der Aufbau ist mit einfachen Elementen (Rohre) möglich. Fig. 2 zeigt den Anbau an eine Fassade 12. Die Basis 2 ist etwa quadratisch ausgeführt und mit Winkeleisen 13 an der Fassade befestigt. Fig. 3 zeigt die Montage in einer Mauerecke mittels Flacheisen 14. Fig. 4 zeigt eine freie Aufstellung auf Stützen 15. In allen Fällen sollen die Kollektoren so montiert werden, dass sie insbesondere durch Kinder nicht berührt werden können, z.B. etwa 2,5m über Grund.

Einzelheiten können anders ausgeführt sein, z.B. das Absorber-Element.

## Patentansprüche

1. Solar-Kollektor mit einem einen Wärmeträger führenden Absorber-Element (9), das in einem mindestens auf einer Seite lichtdurchlässigen Gehäuse derart angeordnet ist, dass zwischen Ein- und Austritt ein Niveauunterschied besteht und damit bei Erwärmung des Absorber-Elementes (9) eine Schwerkraftzirkulation des Wärmeträgers bewirkt wird, **dadurch gekennzeichnet, dass** ein durch den am Austritt des Absorber-Elementes (9) erhitzten Wärmeträger steuerbarer thermo-mechanischer Fühler (7) vorhanden ist, der eine Belüftung des Gehäuses (1-3) zur Begrenzung der Temperatur des Wärmeträgers steuert.

2. Kollektor nach Anspruch 1, **gekennzeichnet durch** eine absteigende, vorzugsweise luftgekühlte Leitung (10) zur Erzeugung einer Schwerkraftzirkulation im Kollektor selbst.

3. Kollektor nach Anspruch 2, **dadurch gekennzeichnet, dass** die absteigende Leitung (10) in einem sie umgebenden Kühlrohr, z.B. Lüftungsrohr (11) angeordnet ist.

4. Kollektor nach einem der Ansprüche 1-3, **dadurch gekennzeichnet, dass** das Gehäuse einen zylindrischen durchsichtigen Gehäusemantel (1) umfasst, der zwischen einer Basis (2) und einem Deckel (3) gehalten ist.

5. Kollektor nach Anspruch 4, **dadurch gekennzeichnet, dass** die Basis (2) und der Deckel (3) Halteflansche (2a bzw. 3a) für den Gehäusemantel (1) aufweisen.

6. Kollektor nach einem der Ansprüche 4-5, **gekennzeichnet durch** einen Reflektor oder eine reflektierende Beschichtung an der Innen- oder Aussenseite des Mantels (1).

7. Kollektor nach einem der Ansprüche 1-6, **gekennzeichnet durch** ein Rückschlagventil im Wärmeträgerkreislauf.

8. Verwendung eines Kollektors nach einem der Ansprüche 1-7, **dadurch gekennzeichnet, dass** der Kollektor mit seinem zylindrischen Gehäuse (1-3) mit der Gehäuseaxe senkrecht montiert wird.
